**Europäisches Patentamt**

**European Patent Office**

**Office européen des brevets**

(19)

(11) Veröffentlichungsnummer : **0 085 355 B2**

(12) ## NEUE EUROPÄISCHE PATENTSCHRIFT

(45) Veröffentlichungstag der neuen Patentschrift :
**22.01.92 Patentblatt 92/04**

(51) Int. Cl.$^5$ : **F16L 23/02**

(21) Anmeldenummer : **83100427.0**

(22) Anmeldetag : **19.01.83**

(54) **Vorrichtung zur Verbindung von Luftkanalelementen, die an ihren Stossrändern mit Aufnahmen für Eckwinkel bildenden Flanschprofilen versehen sind.**

Die Akte enthält technische Angaben, die nach dem Eingang der Anmeldung eingereicht wurden und die nicht in dieser Patentschrift enthalten sind.

(30) Priorität : **30.01.82 DE 3203204**

(43) Veröffentlichungstag der Anmeldung :
**10.08.83 Patentblatt 83/32**

(45) Bekanntmachung des Hinweises auf die Patenterteilung :
**12.11.86 Patentblatt 86/46**

(45) Bekanntmachung des Hinweises auf die Entscheidung über den Einspruch :
**22.01.92 Patentblatt 92/04**

(84) Benannte Vertragsstaaten :
**AT BE CH DE FR GB IT LI LU NL SE**

(56) Entgegenhaltungen :
**EP-A- 0 014 123**
**DE-A- 2 221 312**
**DE-A- 2 353 625**

(56) Entgegenhaltungen :
**DE-A- 2 750 110**
**DE-A- 2 836 761**
**DE-C- 2 313 425**
**GB-A- 2 038 434**
**US-A- 4 218 079**
**US-A- 4 288 115**

(73) Patentinhaber : **Gebhardt, Manfred**
**Unnaer Strasse 8**
**W-4760 Werl (DE)**
Patentinhaber : **Gebhardt, Margret**
**Blumenthaler Weg 4**
**W-4760 Werl (DE)**

(72) Erfinder : **Gebhardt, Manfred**
**Unnaer Strasse 8**
**W-4760 Werl (DE)**
Erfinder : **Gebhardt, Margret**
**Blumenthaler Weg 4**
**W-4760 Werl (DE)**

(74) Vertreter : **Patentanwälte Meinke und Dabringhaus Dipl.-Ing. J. Meinke Dipl.-Ing. W. Dabringhaus**
**Westenhellweg 67**
**W-4600 Dortmund 1 (DE)**

EP 0 085 355 B2

Jouve, 18, rue Saint-Denis, 75001 PARIS

## Beschreibung

Die Erfindung richtet sich auf eine Vorrichtung zur Verbindung von Luftkanalelementen, die an ihren Stoßrändern mit Flanschlprofilen, die Aufnahmen für Eckwinkel bilden, versehen sind, wobei die Flanschprofile zum Über- und Untergreifen der Wände der Luftkanalelemente einerseits und zur Bildung der Aufnahmebereiche für die Eckwinkel andererseits als querschnittlich im wesentlichen L-förmige, aus Blech gefalzte Hohlprofile ausgebildet sind, wobei die nur einlagig gebildeten Wände der einzelnen Profilbereiche im Abstand zueinander im wesentlichen parallel angeordnet sind und ein in der Gebrauchslage parallel zur Trennfugenebene verlaufender Wandbereich des Profiles zur Bildung eines Dichtsteges durch Rückfalzeug um 180° nach innen abgewinkelt ist und ggf, die Innenfläche des gegenüberliegenden Profilbereiches berührt.

Aus dem DE-U-70 25 770 ist eine ähnliche Vorrichtung bekannt, wobei dort der Wandverlauf desjenigen Profilbereiches, der von der Trennenbene des Luftkanalelementes abgewandt ist, lediglich bereichsweise parallel ausgestaltet ist und einen abgeschrägten Stützbereich als Übergang zum einen parallelen Bereich in den dazu senkrecht stehenden parallelen Bereich aufweist. Ebenso ist aus der DD-A 69 697 eine ähnliche Flanschprofilgestaltung allerdings mit der Ausnahme bekannt, daß dort Eckwinkel nicht eingeschoben, sondern die freien Kopfbereiche von Klemmschienen übergriffen werden.

Diese bekannten Eckverbindungen haben den Nachteil, daß sie im Übergangsbereich der Flanschprofile zu den Eckwinkeln nicht ausreichend dicht sind, so daß man schon nach Lösungen gesucht hat, im Inneren der Flanschprofile elastische oder plastische Dichtmassenbereiche vorzusehen, wie dies z.B. aus der DE-A-22 21 312 hervorgeht. Die Nachteile dieser Dichtung versucht die DE-C-23 13 425 dadurch zu überwinden, daß sie in dem in der Trennebene verlaufenden stirnseitigen Schenkel des Profiles einen nach innen gerichteten Wulstfalz vorsieht, der sich auf der Oberseite des stirnseitigen Bereiches der Kanalwände dichtend anlegen soll. Nach dieser Patentschrift ist vorgesehen, daß dem Wulstfalz ein schräger Verlauf gegeben wird, was beim Aufstecken der Profile auf die Stirnseiten der Kanalabschnitte zwar möglicherweise zu dem gewünschten Erfolg führt.

Aufgrund des Keilförmigen Ausbildung des Wulstfalzes müssen die Vorderkanten der Kanalstirnseiten sehr genau gearbeitet werden, da bei Graten od. dgl. an der Blechvorderkante nicht gewährleistet ist, daß die Stirnseite unter den Wulstfalz rutscht, so daß es beim Auschlagen der Profile auf die Stirnseiten zu erheblichen Verformungen und damit zur Aufhebung der Dichtwirkung kommen kann.

Im Stand der Technik sind weitere Lösungen bekannt, so diejenigen nach der DE-A-23 53 625 oder US-A-4 218 079 oder GB-A-2 038 434. Zu diesen Lösungen gehört auch diejenige nach der gattungsbildenden US-A-4 288 115.

Allen obigen Lösungen ist gemeinsam, daß der Dichtsteg in einem senkrecht zur Fugenebene verlaufenden Profilbereich von demjenigem Wandteil ausgeht, der zur Trennfugenebene hin gewandt ist, also dort praktisch eine quer zum Flanschprofil verlaufende Falz bildet. Damit ist die Gefahr einer Undichtigkeit möglich, was bei den bekannten Lösungen durch teilweises Einbringen von Dichtelementen in diese Wulstfalz zu beheben versucht wird. Gelangt nämlich die Dichtung in der Trennfugenebene ein wenig aus ihrer an sich angestrebten Idealposition, so kann vom Inneren des Luftkanales die unter Überdruck stehende Luft in die Wulstfalzluft eindringen, quer durch das gesamte Profil strömen und nach außen an den Stirnseiten der Dichtprofile austreten.

Demgegenüber liegt die Aufgabe der Erfindung in der Schaffung einer Lösung, die diese Nachteile vermeidet und ein sicheres Abdichten gewährleistet.

Diese Aufgabe wird gemäß der Erfindung dadurch gelöst, daß der Dichtsteg in dem in der Gebrauchslage parallel zur Trennfugenebene verlaufenden und von der Trennfuge abgewandten Wandbereich im Übergangsbereich von einem L-Schenkel zum anderen L-Schenkel des Profiles vorgesehen ist. wobei sich unmittelbar an den Dicht- bzw. Verstärkungssteg durch die Rückfalzung der auf den Kanal außen aufliegende Wandbereich des anderen Profilschenkels anschließt.

Mit der Erfindung wird erreicht, daß zum einen der Verlauf der in der Trennfuge liegenden Profilwand völlig glatt und gratfrei ist und zum anderen bei den über die Eckwinkel erzeugten Spannkräften durch die Innenfalzung der Dichtsteg auf die Oberfläche des eingeschobenen Wandbereiches des Luftkanalelementes aufgedrückt wird. Ein schräger Wandverlauf des Dichtsteges ist hier nicht vorgesehen. vielmehr reichen die bei der Kaltverformung oder beim Walzen üblichen Toleranzen vollständig aus.

Aus der DE-A-28 36 761 ist ein Schnappprofil bekannt, das über die Stirnränder der Kanalseitenwände geschoben wird und mit Rastnasen hinter entsprechende Ausprägungen an den Kanalwänden greift. Der Profilverlauf ist sehr aufwendig gefalzt, so ist der Bereich, der unter die Kanalwände greift, dreilagig ausgebildet, während der außen aufliegende Profilwandbereich doppellagig ausgebildet ist. Zusätzlich sind Versteifungssicken vorgesehen, so daß insgesamt ein sehr steifes Blechprofil gebildet ist, welches eine federnde. Verformung in Richtung auf die Trennfugenebene praktisch nicth zuläßt. Gegenüber diesem sehr aufwendigen Profil, bei dem ein Wandbereich zur Taschenbildung die Stirnkante der Kanalseitenwand von hinten her umgreift, wird die dichtende Wirkung bei der erfindungsgemäßen Gestaltung des Profiles durch eine einfache Wulstfalz im rückwärtigen Wandbereich des einen L-Schenkels erreicht. Diese Lage und Anordnung des Wulstfalzes ist von der Fachwelt trotz paralleler Entwicklungen sowohl bei einfachen Profilen als auch bei aufwendigen Mehrfach-Profilen nicht aufgegriffen worden, wie die Vielzahl der eingangs genannten Literaturstellen belegt. Alle mit der Gattung in etwa vergleichbaren Profilformen haben Wulstfalze in der Ebene vorgesehen, in der die Dichtung selbst angeordnet ist. Die oben beschriebenen, damit verbundenen Nachteile vermeidet die Erfindung.

Aus der EP-A-0 014 123 ist eine Profilform bekannt, bei der das freie Ende eines rückwärtigen Flanschprofilbereiches zur Bildung einer Einsteckkammer für eine Eckwinkelschenkel in Richtung auf den in der Trennfugenenbene liegenden Flanschprofilbereich abgewinkelt ist. Diese abgewinkelte freie Ende kann, da seine Lage in der Einbausituation an der Stirnseite des Luftkanales nicht genau definierbar ist, Dichtfunktionen nicht in ausreichendem Maß übernehmen.

Die Erfindung ist nachstehend anhand der Zeichnung beispielsweise näher erläutert. Diese zeigt in
Figur 1 eine perspektivische Ansicht von Bereichen benachbarter Flanschprofile,
Figur 2 einen Querschnitt durch ein Flanschprofil nach der Erfindung.

Die in den Figuren allgemein mit 1 bezeichnete und nur teilweise dargestellte Vorrichtung zur Verbindung von Luftkanalelementen 2, z.B. Kanalschüssen mit rechteckigem Querschnitt aus Blech, besteht im wesentlichen aus auf die Stoßränder 3 der Luftkanalelement 2 aufgeschobenen Flanschprofilen 4 und Eckwinkeln 5, wobei beispielsweise bei quadratischem Querschnitt der Kanalelemente 2 vier Flanschprofile 4 und vier Eckwinkel 5 zusammengesteckt und auf die Stoßränder 3 aufgeschoben eine stirnseitigen flanschartigen Rahmen bilden, der mit einem entsprechenden Rahmen am benachbarten Luftkanalelement, z.B. Zwischenlager einer Dichtung (nicht dargestellt), über die Eckwinkel 5 verspannbar ist.

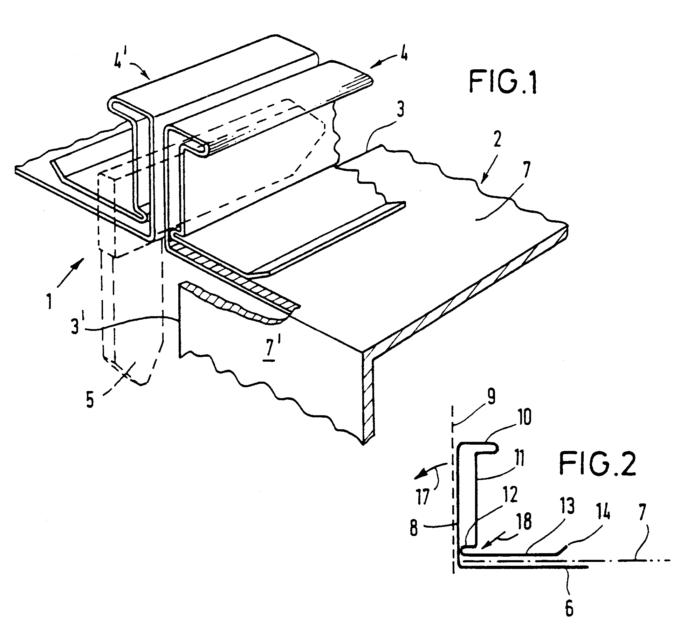

Die Flanschprofile 4 sind, wie sich insbesondere aus Fig. 2 ergibt, querschnittlich etwa L-förmig gestaltet. wobei jeweils im Abstand zueinander parallele Wandflächen gebildet sind. Um die nachfolgende Beschreibung zu erleichtern, werden die einzelnen Wandverläufe weiter unten mit gesonderten Bezugszeichen versehen.

Das in Fig. 2 wiedergegebene Flanschprofil untergreift mit einem Wandbereich 6 die mit 7 bezeichnete, in Fig. 2 strichpunktiert dargestellte Wand eines Luftkanalelementes 2. Der Wandbereich 6 geht rechtwinklig in eine Wandbereich 8 über, der völlig glatt in der gestrichelt dargestellten Trennfugenebene 9 verlaüft. Dieser in der Trennfugenebene 9 verlaufende Wandbereich 8 geht über eine Kopfabkröpfung 10, über die in der Gebrauchslage zusammen mit den entsprechenden benachbarten Profil eine C-förmige Abdeckleiste schiebbar ist, was nicht näher dargestellt ist, in einen senkrechten Wandbereich 11 über. Der Wandbereich 11 ist dann unter Bildung eines die Innenfläche des gegenüberliegenden Wandbereiches 8 berührenden Dichtsteges 12 in Richtung auf den Wandbereich 8 abgekröpft und geht dann unter Rückbiegung um 180° in den Wandbereich 13 über, der parallel zum Wandbereich 6 die Wand 7 des Luftkanalelementes von oben übergreift. An seinem vorderen Ende ist der Wandbereich 13 leicht nach oben abgewinkelt, so daß eine Einschubkante 14 entsteht. Der Wandbereich 6 ist gegenüber dem parallel verlaufenden Wandbereich 13 zur Erleichterung des Einschiebens verlängert ausgebildet, wie sich aus Fig. 2 ergibt.

Wie sich aus Fig. 2 auch in Verbindung mit Fig. 1 ergibt, bilden die Wandbereiche 8 und 11 einerseits einen Aufnahmebereich für einen Schenkel des Eckwinkels 5. Der parallel und im Abstand zueinander gestaltete Verlauf der Wandbereiche 6 und 13, welche den anderen L-Schenkel darstellen, über- bzw. untergreift die Wand 7 des Luftkanalelementes 2.

Die Dichtwirkung des Profiles 4 ergibt sich anschaulich aus dem Querschnittsbild nach Fig. 2. Wird ein Profil 4 gegen das benachbarte Profil 4′ (Fig. 1) über die Verschraubung der Eckwinkel 5 verspannt, so wird eine Kraft in Richtung des Pfeiles 17 in Fig. 2 ausgeübt. Die geringfügige Verbiegung dieses L-Schenkels des Profiles 4 bewirkt, daß die Spitze des Verstärkungs- bzw. Dichtsteges 12 nach unten gedrückt wird, d.h. in Richtung des Pfeiles 18 und eine Aufpreßkraft auf den stirnseitigen Bereich der Wand 7 ausübt.

## Patentansprüche

1. Vorrichtung (1) zur Verbindung von Luftkanalelementen (2) die an ihren Stoßrändern (3) mit Flanschprofilen (4), die Aufnahmen für Eckwinkel (5) bilden versehen sind, wobei die Flanschprofile (4) zum Über- und Untergreifen der Wände (7,7′) der Luftkanalelemente (2) einerseits und zur Bildung der Aufnahmebereiche für die Eckwinkel (5) andererseits als querschnittlich im wesentlichen L-förmige, aus Blech gefalzte Hohlprofile ausgebildet sind, wobei die nur einlagig gebildeten Wände (6,8,11,13) der einzelnen Profilbereiche im Abstand zueinander im wesentlichen parallel angeordnet sind und ein in der Gebrauchslage parallel zur Trennfuge-ne-bene (9) verlaufender Wandbereich des Profiles (4) zur Bildung eines Dichtsteges (12) durch Rückfalzung um 180° nach innen abgewinkelt ist und ggf. die Innenfläche des gegenüberliegenden Profilwandbereiches berührt,

dadurch gekennzeichnet,
daß der Dichtsteg (12) in dem in der Gebrauchslage parallel zur Trennfugenebene (9) verlaufenden und von der Trennfuge abgewandten Wandbereich (11) im Übergangsbereich von einem L-Schenkel zum anderen L-Schenkel des Profiles (4) vorgesehen ist, wobei sich unmittelbar an den Dicht- bzw. Verstärkungssteg (12) durch die Rückfalzung der auf dem Kanal außen aufliegenden Wandbereich (13) des anderen Profilschenkels anschließt.

## Claims

1.An arrangement (1) for connecting air duct elements (2) which are provided at their joint edges (3) with flange profile members (4,4′) which form receiving means for corner angle members (5), wherein the flange profile members (4), for the purposes of engaging over and under the walls (7,7′) of the air duct elements (2) on the one hand and for forming the receiving regions for the corner angle members (5) on the other hand, are in the form of hollow profile members which are of substantially L-shaped cross-section and which are folded from sheet metal, wherein the walls (6,8,11,13), which are formed only by a single layer, of the individual regions of the profile members, are arranged at a spacing from each other in substantially parallel relationship, and a wall region of the profile members (4), which in the position of use extends parallel to the plane (9) of the line of separation is bent over inwardly to form a sealing web portion (12) by being folded back through 180° and touches the inside surface of the oppositely disposed wall region of the profile members, characterised in
that the sealing web portion (12) is provided in the wall region (1) which in the position of use extends parallel to the plane (9) of the line of separation and which is remote from the line of separation, in the transitional region from one limb to the other limb of the L-shape of the profile member (4) whereas the wall region (13) of the other limb of the profile member, which bears on the duct on the outside directly adjoins the sealing or strengthening web portion (12), by being folded back through 180°.

## Revendications

1. Dispositif (1) pour l'assemblage d'éléments (2) de conduit d'air munis, sur leurs bords (3), de profils de bride (4,4′) qui forment des logements pour des cornières d'angle (5), les profils de bride (4) étant réalisés sous la forme de profils creux en tôle pliée de section sensiblement en L, d'une part pour emprisonner par-dessus et par-dessous les parois (7,7′) des éléments (2) de conduit d'air et, d'autre part, pour former les zones de réception des cornières d'angle (5), les parois (6,8,11,13), formées seulement par des couches uniques, des zones profilées individuelles étant disposées sensiblement parallèlement et à distance les unes des autres, une région de paroi du profil (4) s'ètendant, dans la position d'utilisation, parallelement au plan (9) du joint de séparation étant coudée vers l'intérieur pour former une nervure d'étanchement (12) par repli de 180°, et touchant la surface interne de la région de paroi profilée opposée,
caractérisé par le fait
que la nervure d'étanchement (12) est prévue dans la région de paroi (11) qui s'étend parallélement au plan (9) du joint de séparation dans la position d'utilisation et est tournée à l'opposé du joint de séparation, dans la zone de transition entre une branche du L et l'autre branche du L du profil (4) et que la région de paroi (13) de l'autre branche du profil, appliquée exc/rieurement sur le conduit, se raccorde directement à la nervure d'étanchement ou de reforcement (12), par le repli de 180°.

FIG.1

FIG.2